# EUROPEAN PATENT APPLICATION

(11) **EP 3 466 843 A1**
(43) Date of publication of application: **10.04.2019**
(21) Application number: 17194578.5
(22) Date of filing: 03.10.2017
(51) Int. Cl.: B65G 1/04, G01S 17/93, G05D 1/02, B66F 9/14

(54) **A METHOD AND A DEVICE FOR CONTROLLING SPEED OF A MOVING SHUTTLE**

(71) Applicant: AJ Produkter AB, 301 82 Halmstad (SE)
(72) Inventor: Rydsjö, Oscar, 302 94 Halmstad (SE)
(74) Representative: Hansson Thyresson AB

(57) **Abstract**

A method of controlling speed of a moving shuttle (10), comprising detecting reflections from obstacles from a scanning laser beam in a plurality of search areas, said search areas being located adjacent to each other along a straight line in from said shuttle and in the direction of movement of said shuttle. A distance from said shuttle to said obstacle is continuously determined and shuttle (10) is stopped when the determined distance is within a stop search area (S) adjacent to shuttle. Speed of shuttle is decreased when determined distance is within a first search area (VF1) more distant from shuttle.

The device comprises at least two laser scanners (24) arranged at opposite front and rear sides of shuttle (10), said laser scanners (24) emitting beams of laser light and determining a distance to objects based on reflections of laser light from said objects, and a control unit (28) operatively connected to said laser scanners (24) to receive signals indicative of objects present in at least stop search area (S) and first search area (VF1).

## Description

### TECHNICAL FIELD

The invention relates to a method and a device for controlling speed of a shuttle moving in multi-storey goods storage arrangement. A multi-storey goods storage arrangement can comprise a plurality of levels of storage lines arranged in parallel, each storage line being arranged to support a plurality of pallets or similar supporting devices with packages or boxes. The pallets or similar supporting devices are supported on rails extending along said storage lines. A shuttle is arranged to move independently supporting sections of said rails in storage lines to place a pallet and to pick up a pallet. The shuttle comprises lifting means arranged to be raised to lift a pallet during movements of the shuttle and to be lowered at a selected position to place the pallet on the rails.

### PRIOR ART

Prior art shuttles can be placed at an end section of a storage line and move independently along the rails to place or to pick up pallets with goods. Various kinds of sensors are used to detect obstacles in the storage line ahead of the shuttle. The shuttle is also provided with means to detect end of a storage line and pallets with goods in the storage line. When an obstacle or the end of the storage line is detected the speed of the shuttle is decreased to a low safety speed due to safety regulations.

Some prior art shuttles are provided with a laser scanner arranged to detect distance to obstacles and to generate different warning signals at different distances between the shuttle and the obstacle. Such a laser scanner also will adjust the speed to the low safety speed at a predetermined distance from an end of the storage line. The safety speed is set to such a low speed that a person being in front of the shuttle will be able to move away from the area into which the shuttle is moving. The laser scanner also can provide a stop signal, should a safety distance between the shuttle and an obstacle be detected.

It is desirable to increase the efficiency of operation of the shuttle and to maintain a higher speed during movement of the shuttle in a storage line.

### SUMMARY OF THE INVENTION

In accordance with the invention a method is used to define a plurality of search areas in the direction of movement of the shuttle and to adjust the speed of the shuttle in dependence of the specific search area an obstacle is detected in. If no obstacles, including end of storage line, are detected speed of shuttle is adjusted to a maximum speed. Detection of an obstacle at a distant search area will result in generation of a signal to the shuttle to maintain present speed, while detection of an obstacle at search area closer to the shuttle will result in the generation of a speed decreasing instruction.

Detection of an obstacle at search area closest to the shuttle will result in the generation of a stop signal because this may be a dangerous situation with a person very close to the operation area of the shuttle. Normally, when the shuttle is very close to the end of a storage line a separate system is activated. End of storage line is detected by the separate system, so as to allow the shuttle to move the last part of the storage line to the absolute end. In various embodiments, search areas and detection of obstacles are disabled when end of storage line is detected.

In various embodiments, three search areas are used. The length of each search area may vary depending on the present speed of the shuttle. Normally, a higher speed will extend the length of the search area closest to the shuttle. As a result, safety is increased at higher speed of the shuttle while maintaining an efficient speed throughout most normal operations.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic top view of a shuttle using one embodiment of a control system in accordance with the invention,
- Fig. 2: is a schematic side view of the shuttle in Fig. 1,
- Fig. 3: is a schematic top view of a shuttle using one embodiment of a control system in accordance with the invention,
- Fig. 4: is a schematic side view of a shuttle using one embodiment of a control system in accordance with the invention and a distance meter,
- Fig. 5: is a schematic diagram showing different search areas used at different shuttle speeds,
- Fig. 6: is a schematic diagram showing different lengths of a stop area used at different shuttle speeds in accordance with a first embodiment of the invention,
- Fig. 7: is a schematic diagram showing different lengths of a stop area used at different shuttle speeds in accordance with a second embodiment of the invention, and
- Fig. 8: is a schematic block diagram showing signal processing in a control unit of shuttle.

### DETAILED DESCRIPTION

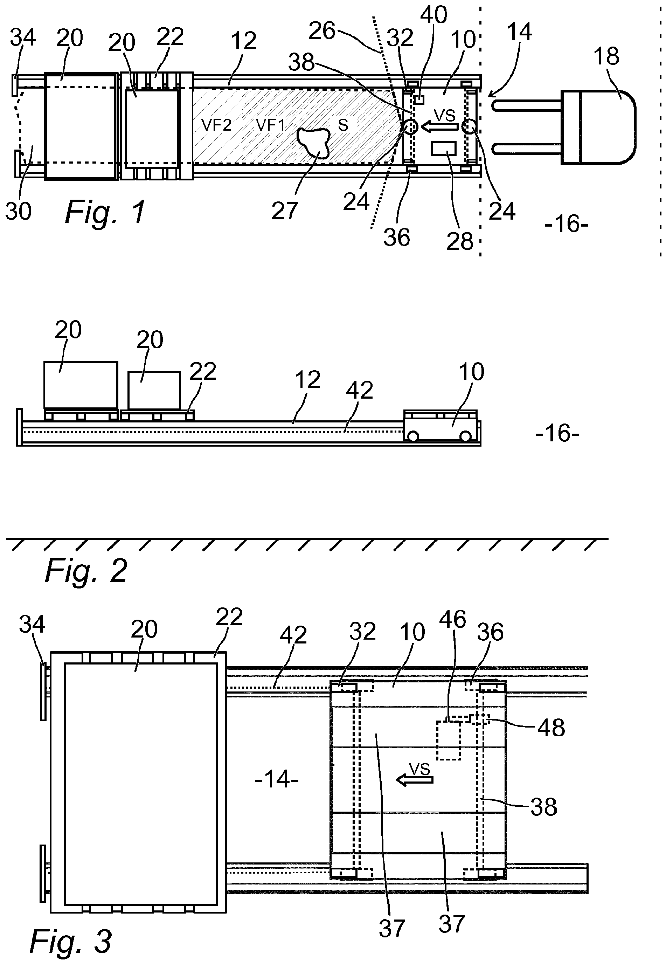

The basic embodiment of a shuttle 10 using a control method and a control device in accordance with invention shown in Fig. 1 to Fig. 4 is running on a rail system 12. Rail system 12 forms a storage line 14 and is part of a multi storey storage comprising a plurality of storage lines. A plurality of transport aisles 16 runs at right angles to the storage lines 14 and between sets of storage lines. Lift trucks 18 run in the transport aisles 16 to place shuttles 10 and goods or packages 20 in the storage lines 14. Normally, goods 20 are placed on pallets 22 or similar supporting devices. Lift trucks 18 also collect or pick up pallets 22 and shuttles 10 to move them to other storage lines or conveyers for further handling. Shuttles 10 are provided with a lift mechanism arranged to lift a pallet above rail system 10, so as to allow transportation of pallets in storage lines 14. Lift mechanism comprises two goods support platforms 37 that can be raised to a position where a pallet is above rail system 12 and can be moved along storage line 14.

Shuttle 10 has a rectangular shape and is provided with laser scanners 24 in a front end and in a rear end. Normally, only one laser scanner 24 is in operation based on the direction the shuttle 10 is moving in. Laser scanners 24 generate a laser beam 26 at a wide angle in a horizontal plane. Any objects 27 within the laser beam will cause a reflection that is received and processed in the laser scanner and in a control unit 28 on shuttle 10. Control unit 28 also filters reflections outside a narrow general search area 30 in front of shuttle 10 in the direction of movement. Laser scanners 24 are commercially available, such as UAM-05LP from HOKUYO. Control unit 28 is communicating with a remote control (not shown) for receiving basic control signals such as start, stop and mode of operation. Different modes of operation can be run, such as continuous loading, load, pick and continuous picking. Shuttle 10 will operate autonomously after receiving such an instruction in control unit 28.

General search area 30 comprises a stop search area S closest to shuttle 10, a first search area VF1 further away from shuttle 10 and a second search area VF2 even further away from shuttle 10. Search areas are arranged adjacent to each other. In various embodiments, stop search area S is longer than other search areas. If an object is detected in any of said search areas control unit 28 will generate different control signals to control the speed and braking of shuttle 10.

In various embodiments, shuttle 10 is provided with laser detectors 32 at corner sections. Laser detectors 32 are used mainly to detect obstacles in front of shuttle 10 in connection with a final positioning of shuttle 10 at an end section of the rails and close to a pallet already in position on the rail. End section of the rails can be indicated by a stop plate 34 or a similar object that is detectable by laser detectors 32. Shuttle 10 is provided with speed sensors continuously measuring the present speed of the shuttle. In the embodiment of shuttle 10 shown in Fig. 1 and Fig. 2, the speed sensors comprise pulse transmitters 40.

In various embodiments of the invention control unit 28 is arranged to operate on reflection signals on the basis of distance to the reflecting object and the present speed of the shuttle. Wheels 36 of shuttle 10 are connected to shafts 38. At least one shaft 38 is provided with pulse transmitter 40 that will produce pulses when shaft 38 rotates. One embodiment of pulse transmitter 40 generates two sets of pulses where a time difference between pulses indicates a direction of rotation of shaft 38 and thus the direction of movement of shuttle 10. In various embodiments, one pulse transmitter 40 is arranged at each shaft 38, so as to provide redundancy.

In Fig. 3, shuttle 10 is moving towards an end of storage line 14 and stop plates 34 at speed VS. At some distance from stop plates 34 laser detectors 32 are activated and a narrow laser beam 42 is emitted in the direction of movement of shuttle 10. Laser signals reflected from stop plates 34 will be used by control unit 28 to control the speed of shuttle 10 during a final move towards end of storage line 14 to pick up pallet 22 with goods 20. In accordance with the invention the final move at a comparatively low speed can be made very short as will be described further below. A motor with transmission 46 is connected to a gear wheel 48 of shaft 38. Motor with transmission 46 is operatively connected to control unit 28 for receiving signals relating to speed control and direction of movement of shuttle 10.

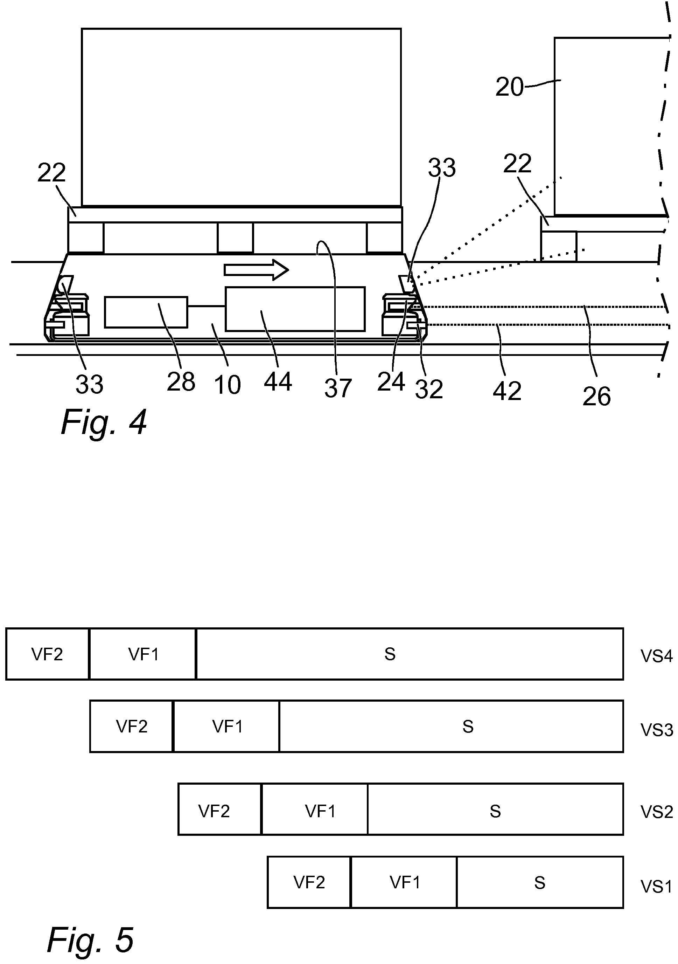

As shown in Fig. 4, control unit 28 and other electrically powered units of shuttle 10 are connected to a power source 44, such as a set of chargeable batteries. In the embodiment shown laser scanners 24 and laser detectors 32 operate at different vertical levels and emit laser beam 26 and narrow laser beam 42 at different vertical levels. Proximity detectors 33 such as ultra sound detectors are provided in corners of shuttle 10 for detecting pallets and goods on pallets above rail system 12. Proximity detectors 33 normally are in operation only in the direction of movement of shuttle 10 and if lifting mechanism of shuttle is in a raised position. When proximity detectors 33 detect a pallet or goods on a pallet control unit 28 will allow only a short further movement of shuttle 10 at a low speed. The short further movement is allowed by control unit 28 even if signals indicative of objects being present in front of shuttle 10 are being received. When shuttle 10 has come to a full stop signals from laser scanners 24 are ignored by control unit 28. Lift mechanism of shuttle 10 will be activated for lifting and lowering pallets only when control unit 28 has received signals from pulse transmitters 40 that shuttle 10 has come to a full stop.

Control unit 28 is operatively conned to laser scanners 24 and receives signals indicative of distances to objects in front of shuttle 10. The area in front of shuttle 10 is divided into three search areas as described above. A normal situation with shuttle 10 moving along storage line 14 is shown in upper part of Fig. 5. Shuttle 10 is moving at speed VS4 which is a maximum allowed speed. No objects are detected in any search areas. In various embodiments, maximum allowed speed is 2400 mm/s. If an object is detected in stop search area S, control unit 28 immediately generates a stop signal that will cause shuttle 10 to come to an immediate stop. Should an object be detected in first search area VF1 and no object in stop search area S control unit 28 will generate a signal to decrease speed of shuttle 10 to a lower speed such as VS3. Should an object be detected in second search area VF2 and no object in either other search area control unit 28 will generate a signal to maintain present speed of shuttle 10.

In various embodiments, lengths of search areas are shortened at lower speed. When speed is VS3 which is lower than VS4 stop search area S has a shorter length than at speed VS4. Length of first search area VF1 and second search area VF2 can also be shortened. Shortening of lengths search areas can be done in further two steps as indicated in Fig. 5. Longer lengths of search areas at higher shuttle speeds improve safety because more time will be available for different measures taken by control unit 28.

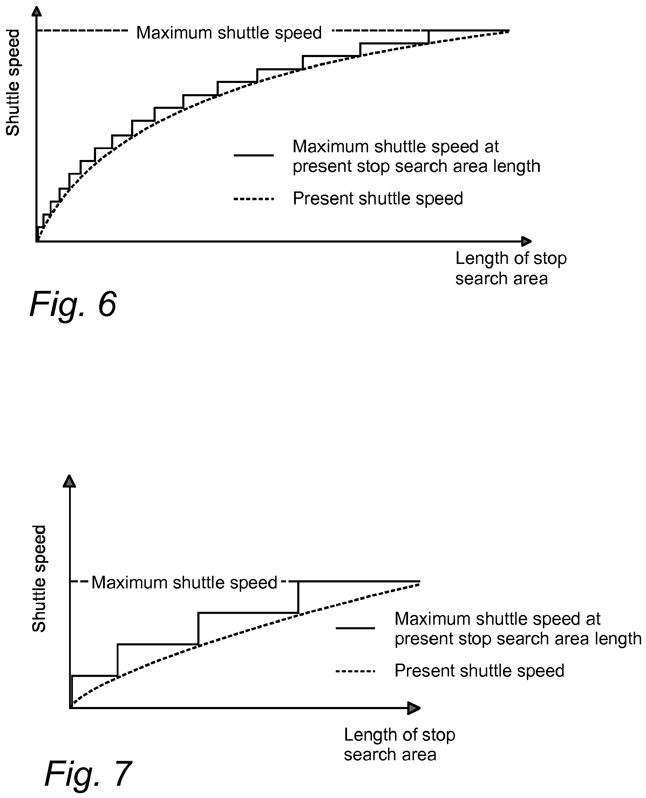

If an object detected in any of said search areas disappears speed of shuttle 10 resumed or increased depending on the present speed. If no objects are detected in any search areas, speed will be increased to maximum speed as shown in Fig. 6 and Fig. 7.

In various embodiments, length of at least stop search area S is increased at higher speeds of shuttle 10. Relation between length of search area S and speed of shuttle is not linear. Length of stop search area S increases more than speed, such as quadratically. Length of stop search area S can be adjusted step wise, such as in sixteen steps as shown in Fig. 6 or in four steps as shown in Fig. 7. Unbroken line indicates maximum shuttle speed at present length of stop search area S. Dashed line indicates present shuttle speed.

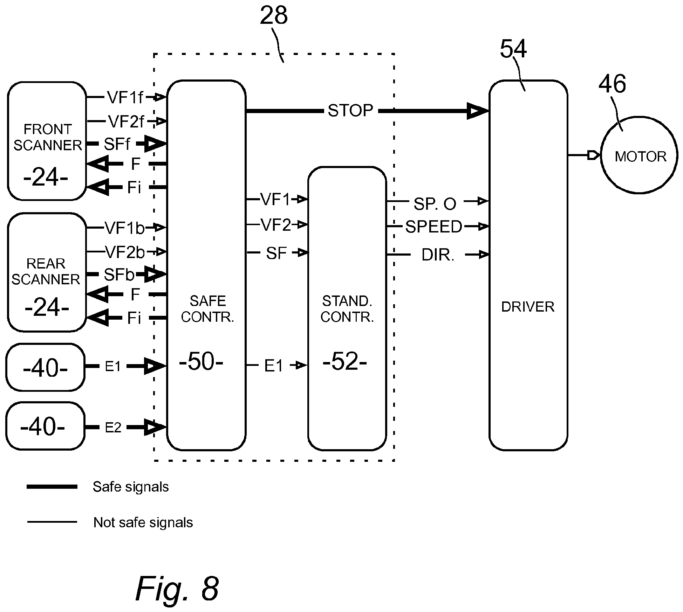

As indicated in Fig. 8, control unit 28 can be divided into a safe control section 50 and a standard control section 52. Signals to and from control unit 28 can be safe signals as indicated with bolder lines and not safe signals as indicated with normal lines. Front and rear scanners 24 receive field information F setting different search fields. An inverse field information Fi is also received. Signals F and Fi are safe signals that are processed by safe control section 50. Laser scanners 28 generate object information depending on distance to a detected object and on the search field area an object is detected in. Communication is allowed only from safe control system 50 to standard control system 52, not the other way around.

An object detected in first search field area VF1 by front scanner will generate signal VF1f and correspondingly an object detected in first search field area VF1 by rear scanner will generate signal VF1b. An object detected in second search field area VF2 by front scanner will generate signal VF2f and correspondingly an object detected in second search field area VF2 by rear scanner will generate signal VF2b. Signals VF1f to VF2b are all not safe signals. An object detected in stop search field area S by front scanner will generate signal SFf and correspondingly an object detected in stop search field area S by rear scanner will generate signal SFb. SFf and SFb are safe signals.

Speed signals E1 and E2 from encoders or pulse transmitters 40 provide control unit 28 with information about present speed and direction of movement of shuttle 10. Speed of shuttle 10 is of course of major importance and therefore speed signals E1 and E2 are safe signals. Not safe signals, such as those relating to search areas and speed signals, are forwarded to standard control section 52. Standard control section 52 controls speed of shuttle 10 during normal conditions using basic control signals such as speed order SP. O, present speed SPEED and present direction DIR..

Standard control section 52 is operatively connected to a driver 54 and basic control signals are used by driver 54 to operate motor with transmission 46. Any type of error condition or a signal indicative of an object being present in stop search area S causes a stop signal STOP to be generated in safe control section 50 and sent to driver 54 to stop motor and shuttle 10. In various embodiments stop signal STOP also will activate brakes of shuttle 10.

While certain illustrative embodiments of the invention have been described in particularity, it will be understood that various other modifications will be readily apparent to those skilled in the art without departing from the scope and spirit of the invention. Accordingly, it is not intended that the scope of the claims appended hereto be limited to the description set forth herein but rather that the claims be construed as encompassing all equivalents of the present invention which are apparent to those skilled in the art to which the invention pertains.

## Claims

1. A method of controlling speed of a moving shuttle (10), **characterized_by**
detecting reflections from obstacles from a scanning laser beam in a plurality of search areas, said search areas being located adjacent to each other along a straight line in from said shuttle and in the direction of movement of said shuttle,
determining a distance from said shuttle to said obstacle,
stopping shuttle when the determined distance is within a stop search area (S) adjacent to shuttle, and
decreasing speed of shuttle when determined distance is within a first search area (VF1) more distant from shuttle.

2. A method in accordance with claim 1, also comprising
maintaining speed of shuttle when determined distance is within a second search area (VF2) more distant from shuttle than said first search area (VF1).

3. A method in accordance with claim 1, also comprising
adjusting length of at least said stop search area (S) in dependence of the speed of the moving shuttle.

4. A method in accordance with claim 1, also comprising
increasing length of at least said stop search area (S) at higher speeds of the moving shuttle.

5. A method in accordance with claim 1, also comprising
increasing speed of shuttle (10) when no reflections from obstacles are detected in any of said search areas.

6. A method in accordance with claim 1, wherein shuttle (10) is moving along rail systems (12) in storage lines (14) where pallets with goods are supported on said rail system (12), also comprising
detecting proximity of a pallet or goods on a pallet in the direction of movement of shuttle (10) and providing a proximity signal, and
allowing shuttle (10) to move a further predetermined distance when the determined distance is within a search area (S; Vf1; VF2).

7. A method in accordance with claim 4, also comprising
increasing length of at least said stop search area (S) at higher rate than a rate of increasing speed of shuttle (10).

8. A device for controlling speed of a moving shuttle (10), **characterized_by**
at least two laser scanners (24) arranged at opposite front and rear sides of shuttle (10), said laser scanners (24) emitting beams of laser light and determining a distance to objects based on reflections of laser light from said objects,
a control unit (28) operatively connected to said laser scanners (24) to receive signals indicative of objects present in at least a stop search area (S) and a first search area (VF1) in front of shuttle (10) in direction of movement of shuttle (10), wherein control unit (28) is arranged to stop shuttle (10) when an object is present in stop search area (S), and to decrease speed of shuttle when an object is present in first search area (VF1) more distant from shuttle than said stop search area (S).

9. A device in accordance with claim 8, wherein
control unit (28) is arranged to maintain speed of shuttle when determined distance is within a second search area (VF2) more distant from shuttle than said first search area (VF1).

10. A device in accordance with claim 8, wherein shuttle (10) is moving along rail systems (12) in storage lines (14) where pallets with goods are supported on said rail system (12), also comprising
at least two proximity detectors (33) arranged at opposite front and rear sides of shuttle (10) for detecting proximity of a pallet (22) or goods on a pallet in the direction of movement of shuttle (10) and providing a proximity signal, wherein said at least two proximity detectors (33) are operatively connected to control unit (28), and wherein control unit (28) is arranged to allow shuttle (10) to move a further predetermined distance when the determined distance is within a search area (S; Vf1; VF2).

11. A device in accordance with claim 8, wherein shuttle (10) comprises a lift mechanism with two goods platforms (37) that can be raised to a position where a pallet (22) is above rail system (12) and can be moved along storage line (14).

12. A device in accordance with claim 8, wherein
at least one speed detector comprising pulse transmitters (40) is operatively connected to control unit (28) for providing a shuttle speed signal.

13. A device in accordance with claim 8, wherein
control unit (28) is divided into a safe control section (50) and a standard control section (52), said safe control section (50) being operatively connected to laser scanners (24) and pulse transmitters (40) to receive signals indicative of distance to objects and speed of shuttle (10), and said safe control section (50) being arranged to forward control signals to said standard control section (52).

14. A device in accordance with claim 8, wherein
a driver (54) is operatively connected to control unit (28) to receive control signals, and to a motor (46), wherein motor (46) is arranged to run shuttle (10).
